# EUROPEAN PATENT SPECIFICATION

(11) **EP 3 333 855 B1**
(45) Date of publication and mention of the grant of the patent: **25.03.2020**
(21) Application number: 17206012.1
(22) Date of filing: 07.12.2017
(51) Int. Cl.: G21C 17/017, G21C 19/20, B23P 19/02, G21C 13/02

(54) **SYSTEMS AND METHODS FOR NUCLEAR REACTOR DRY TUBE ASSEMBLY REMOVAL AND INSTALLATION**
SYSTEME UND VERFAHREN ZUR KERNREAKTOR-TROCKENROHRANORDNUNGSENTFERNUNG UND -INSTALLATION
SYSTÈMES ET PROCÉDÉS D'ENLÈVEMENT ET D'INSTALLATION D'UN ENSEMBLE DE TUBE SEC POUR RÉACTEUR NUCLÉAIRE

(30) Priority: 09.12.2016 US 201615373646
(43) Date of publication of application: 13.06.2018
(73) Proprietor: GE-Hitachi Nuclear Energy Americas LLC, Wilmington, NC 28401 (US)
(72) Inventor: WATTS, Kevin D., Wilmington, NC North Carolina 28401 (US); ALLISON, Mark P., Wilmington, NC North Carolina 28401 (US)
(74) Representative: Handsome I.P. Ltd

(56) References cited:
- JP-A- H0 527 086
- JP-A- H11 133 179
- JP-A- 2005 010 117
- JP-U- S5 689 998

## Description

### BACKGROUND

Commercial nuclear reactors, particularly boiling water reactors, often use several different types of instrumentation tubes in their reactor pressure vessels to monitor in-vessel and reactor core conditions. Such instrumentation tubes may be wholly sealed structures for placement in a nuclear reactor or may be permanent structures opening at an end of the reactor to permit insertion of instrumentation and other devices without interacting with the reactor internals or causing loss of coolant. One known type of instrumentation tube is a dry tube, which is typically a hollow, sealed tube placed in a core or other location in a reactor pressure vessel and can be fully removed from the same. The dry tube can house sensors and other instruments that are retrievable during a maintenance period for analysis and replacement. Typically, such dry tubes reside in fixed internal locations and are secured to in-vessel structures so as to prevent their movement or interference with coolant flow and other reactor operations.

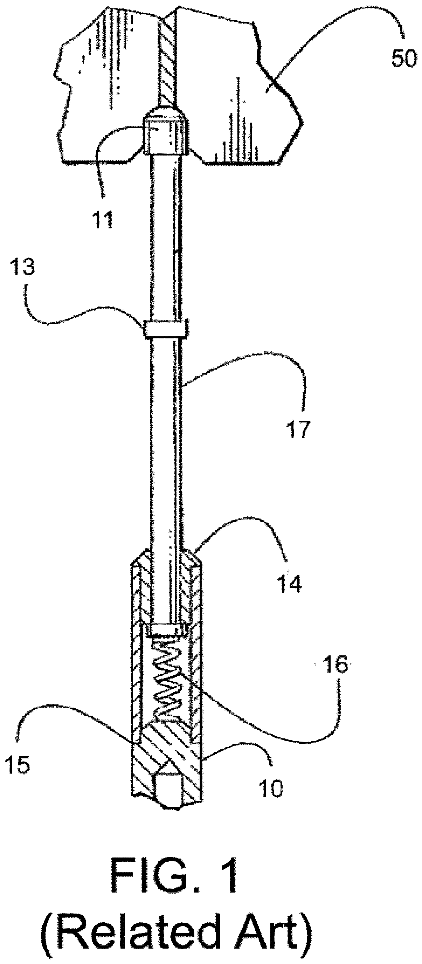

FIG. 1 is cross-sectional schematic view of a top portion of a related art dry tube 10 as installed in top plate 50 in a nuclear reactor pressure vessel. Dry tube 10 conventionally includes a biased plunger 17 that forcibly seats into top plate 50 via an end spur or knob 11. For example, a spring 16 or other biasing element in plunger guide 14 may vertically drive plunger 17 into top plate 50. Plunger guide 14 and spring 16 can join to a top joint 15 of dry tube 10 that serves as a base for spring 16 and prevents further vertical movement of plunger 17 in guide tube 14. A ledge or boss 13 on plunger 17 typically aids with seating and determining vertical distention of plunger 17.

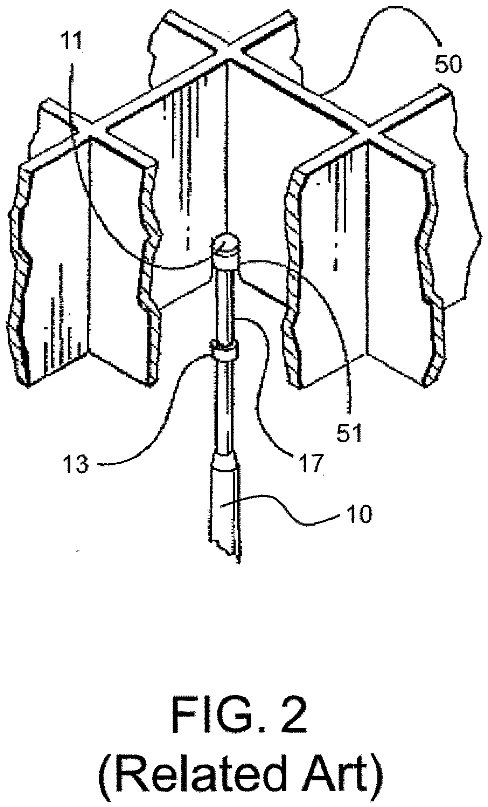

As seen in FIG. 2, dry tube 10 can seat up into a recess 51 of top plate 50 at an intersection of grid points of top plate 50. Top plate 50 typically serves as an alignment and support structure above the nuclear fuel in a reactor core, and positions of an intersection of grids in top plate 50 are usually otherwise unoccupied. An opposite end of dry tube 10 (not shown) may seat into a holder, lower plenum, or other core structure vertically below top plate 50 and recess 51. Under the force of plunger 17, dry tube 10 is thus vertically secured into recess 51 of top plate 50 in a nuclear reactor vessel.

Similar related dry tubes are described in co-owned US Patent 8,631,563 issued January 21, 2014. JPS5689998U relates to an apparatus for removing a neutron flux monitor from a nuclear reactor. JP2005010117A relates to a removing device and method for a neutron flux monitor in a nuclear reactor. JPH11133179A relates to an intra-furnace instrumentation tube detaching device. JPH0527086A relates to a handling device for a neutron instrumentation pipe.

### SUMMARY

The present invention provides a tool system and a method, as defined in the appended claims.

Examples include tool systems used in removal, installation, and/or movement of dry tubes in reactors without complete removal of fuel adjacent to the tubes. Examples include a body that fits into a top guide opening to secure next to a dry tube of interest and a retainer that can manipulate the dry tube for insertion, removal, positioning, etc. Example tools may include retainers such as forks, hooks, clamps, lassos, etc. for the retainer that secures to the dry tube, and such retainers may occupy and extend diagonally in a quadrant about a fuel assembly to avoid any other remaining fuel assemblies adjacent to the dry tube. The retainer may be moveable so as to vertically push or pull a dry tube or plunger in the same to release or secure the dry tube to a core structure such as a holder and/or top guide. The retainer may also move horizontally so as to clear or insert a dry tube from or for such vertical movement.

Example methods include installing and/or removing dry tubes by removing only a subset of directly adjacent fuel assemblies next to the dry tube. An example removal tool may then be installed next to the dry tube without interfering with the remaining assemblies. A retainer can be operated from the tool to grasp and manipulate the dry tube so that the tool and the attached dry tube can be moved together in the reactor.

### BRIEF DESCRIPTION OF THE DRAWINGS

Example embodiments will become more apparent by describing, in detail, the attached drawings, wherein like elements are represented by like reference numerals, which are given by way of illustration only and thus do not limit the terms which they depict.
FIG. 1 is a schematic cross section of a related art dry tube as installed in a nuclear power vessel.
FIG. 2 is a perspective view of the related art dry tube.
FIG. 3 is an illustration of an example embodiment dry tube removal tool.
FIG. 4 is a profile view of the example embodiment dry tube removal tube of FIG. 3.
FIG. 5 is an illustration of an example embodiment system for operating and powering a grasping fork in a first position.
FIG. 6 is an illustration of the example embodiment system for operating and powering a grasping fork in a second position.

### DETAILED DESCRIPTION

Because this is a patent document, general broad rules of construction should be applied when reading and understanding it. Everything described and shown in this document is an example of subject matter falling within the scope of the appended claims. Any specific structural and functional details disclosed herein are merely for purposes of describing how to make and use example embodiments or methods. Several different embodiments not specifically disclosed herein fall within the claim scope; as such, the claims may be embodied in many alternate forms and should not be construed as limited to only example embodiments set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected," "coupled," "mated," "attached," or "fixed" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.). Similarly, a term such as "communicatively connected" includes all variations of information exchange routes between two devices, including intermediary devices, networks, etc., connected wirelessly or not.

As used herein, the singular forms "a", "an" and "the" are intended to include both the singular and plural forms, unless the language explicitly indicates otherwise with words like "only," "single," and/or "one." It will be further understood that the terms "comprises", "comprising,", "includes" and/or "including", when used herein, specify the presence of stated features, steps, operations, elements, ideas, and/or components, but do not themselves preclude the presence or addition of one or more other features, steps, operations, elements, components, ideas, and/or groups thereof.

It should also be noted that the structures and operations discussed below may occur out of the order described and/or noted in the figures. For example, two operations and/or figures shown in succession may in fact be executed concurrently or may sometimes be executed in the reverse order, depending upon the functionality/acts involved. Similarly, individual operations within example methods described below may be executed repetitively, individually or sequentially, so as to provide looping or other series of operations aside from the single operations described below. It should be presumed that any embodiment having features and functionality described below, in any workable combination, falls within the scope of example embodiments.

As used herein, the term "dry tube" is defined as a body shaped and sized to fit inside of a nuclear reactor with no aperture or opening outside of the reactor. As defined, the body includes a heterogeneous interior shaped to house differing structures, such as an internal cavity housing sensors. As defined, the "dry tube" is nondestructively removable and securable within the reactor by itself, being fixedly attachable to and independently removable from other reactor structures such as fuel, top guides, core plates, instrumentation tubes, shrouds, vessel walls, etc. As such, "dry tube" includes existing dry tubes in commercial nuclear power reactors used to house instrumentation and sensors in nuclear cores and elsewhere.

The inventors have newly recognized that existing dry tube removal tools and techniques typically require removal of all fuel assemblies adjacent to the dry tube, potentially with relocation of the top guide, to access and remove the dry tube. Because dry tubes are often positioned at top plate intersections they are typically present at four fuel assembly intersections, and existing tools require all these assemblies to be removed or the assemblies block the tool. The inventors have newly recognized that the requirement to move fuel to create openings for existing dry tube removal tools is cumbersome and wastes time during an outage, when fuel typically needs to be shuffled and loaded into the core without removing all assemblies adjacent to a dry tube. Further, replacement of dry tubes should not wait until all fuel openings are created during refueling, because a fresh dry tube is necessary to properly monitor criticality and neutronics during reloading. Example embodiments described below address these and other problems recognized by the inventors with unique solutions enabled by example embodiments.

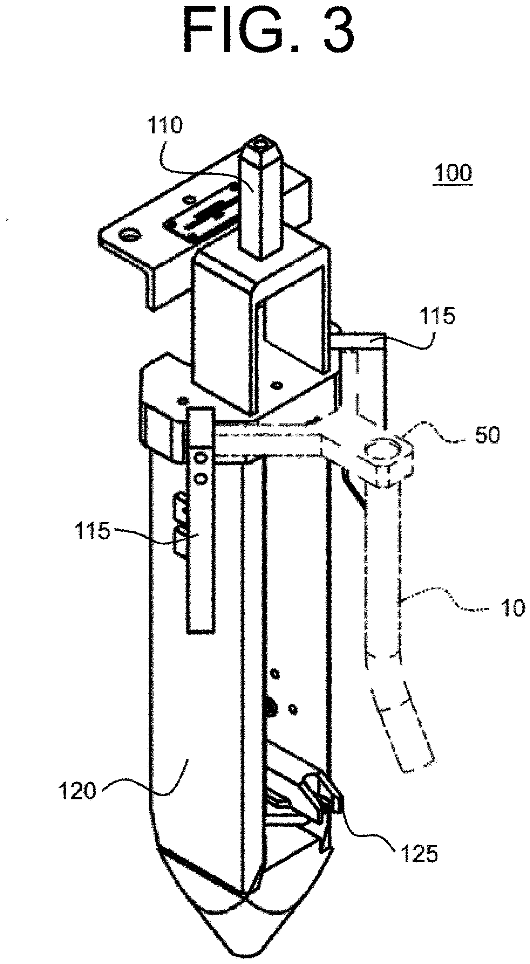

The present invention relates to dry tube removal apparatuses and methods of use in nuclear reactor environments. The small number of example embodiments and example methods discussed below illustrate just a subset of the variety of different configurations that can be used as and/or in connection with the present invention. FIG. 3 is a perspective illustration of example embodiment dry tube removal tool 100. As shown in FIG. 3, example embodiment dry tube removal tool 100 is a generally vertically elongated structure for submersion in a nuclear reactor. Tool 100 may include a handling and connection post 110 configured to connect to a bridge or crane operating above the nuclear reactor, likely flooded during refueling. For example, tool 100 may be lowered vertically from a crane connected to connection post 110 to a desired vertical level within a reactor.

The dry tube removal tool 100 is shaped to fit in a single quadrant of an opening in a top guide 50. Body 120 of tool 100 extends in a vertical direction with a transverse cross-section substantially shaped to top guide 50. In this way, body 120 of tool 100 may be vertically lowered into an opening of top guide 50 and pass along the same without interference. For example, in the instance of a rectilinear top guide 50 with a chamfered edge as shown in FIG. 3, body 120 may be largely rectilinear as well with a chamfered front to match top guide 50. In this way, tool 100 may occupy only a single quadrant about dry tube 10 yet fit close to dry tube 10 for handling and removal of the same.

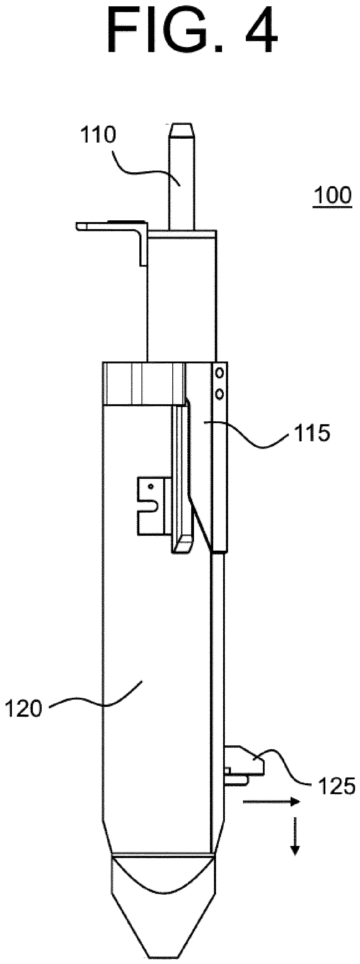

As seen in FIG. 4, a profile view of example embodiment tool 100, one or more wings 115 extend from body 120 to secure and position tool 100 with respect to top guide 50. Wings 115 may be sufficiently separated from body 120 so as to permit a top guide portion to seat between wing 115 and body 120 securely. The secure seating may permit only limited vertical movement, holding body 120 relatively flush against and at constant position with the top guide. As shown in FIG. 3, two wings 115 may extend from body 120 at roughly 90-degree angles from each other in order to seat around opposite sides of an opening in top guide 50, for example. Because example embodiment tool 100 may secure to top guide 50 in only a quarter of an intersection above dry tube 10, a fuel assembly may remain in a diagonal position adjacent to dry tube 10 without interfering with tool 100.

The tool 100 includes a retainer that structurally secures to dry tube 10 in a removable fashion for moving dry tube 10 in several different directions to achieve removal and/or installation of dry tube 10. For example, a grasping fork 125 may be positioned relatively lower from wing 115 and/or top guide 50 when tool 100 is installed on top guide 50. For example, grasping fork 125 may be several inches or feet lower toward a bottom of body 120 in order to coincide with a washer, grommet, or boss 13 (FIG. 1) of dry tube 10 or a plunger 17 of dry tube 10.

As shown in FIG. 4, grasping fork 125 is moveable outward in a transverse direction and downward in a vertical direction. Grasping fork 125 may move outward, transversely from body 120 to securely grasp a dry tube positioned adjacent to tool 100 installed on a top guide. For example, grasping fork 125 may include a biasing element or spring that causes its prongs to surround the dry tube and secure to the same. Or grasping fork may mechanically expand around and then clamp onto a dry tube. Grasping fork 125 may then move vertically downward to compress a plunger of the dry tube and remove the same from a top guide. For example, grasping fork 125 may seat onto plunger 17 and/or boss 13 and compress the same down into plunger guide 14 (FIG. 1) to remove the dry tube from the top guide. Grasping fork 125 may then be transversely withdrawn with the dry tube and/or tool 100 may be vertically lifted off the top guide, such as by a lifting crane, with the dry tube to remove the dry tube from the core.

As shown in FIG. 3, because example embodiment tool 100 can be secured in a single quadrant about a grid intersection in top guide 50, with grasping fork 125 extending and retrieving dry tube 10 out of top guide 50 from that single quadrant, other adjacent fuel assemblies may be left in a core during dry tube removal. For example, a fuel assembly diagonal from tool 100 about dry tube 10 may be left in a core without impacting tool 100 for removal of dry tube 10. Thus, fewer fuel moves and offloading may be required prior to dry tube removal and replacement, overall shortening the process and allowing fresh detectors and sensors in replaced dry tubes without as much initial fuel movement.

Grasping fork 125 or another retainer may be powered in a variety of ways. For example, grasping fork 125 may be driven by a local motor and battery configured to move the same relative to body 120. Or, grasping fork 125 may be driven by a local pneumatic air source stored in body 120. Still further, grasping fork 125 may be powered remotely, such as through an electrical or pneumatic line extending from an operating bridge above the reactor, potentially on a same line connected to connection post 110.

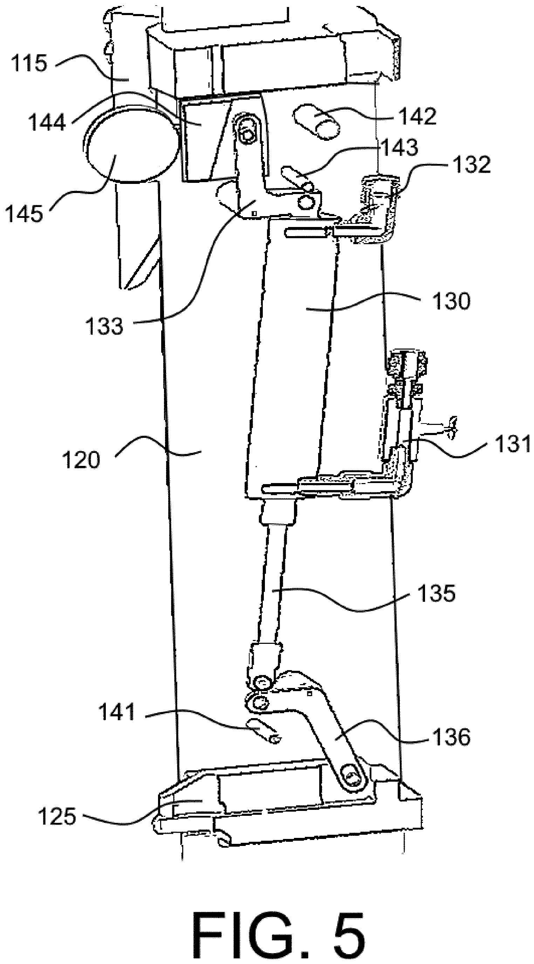

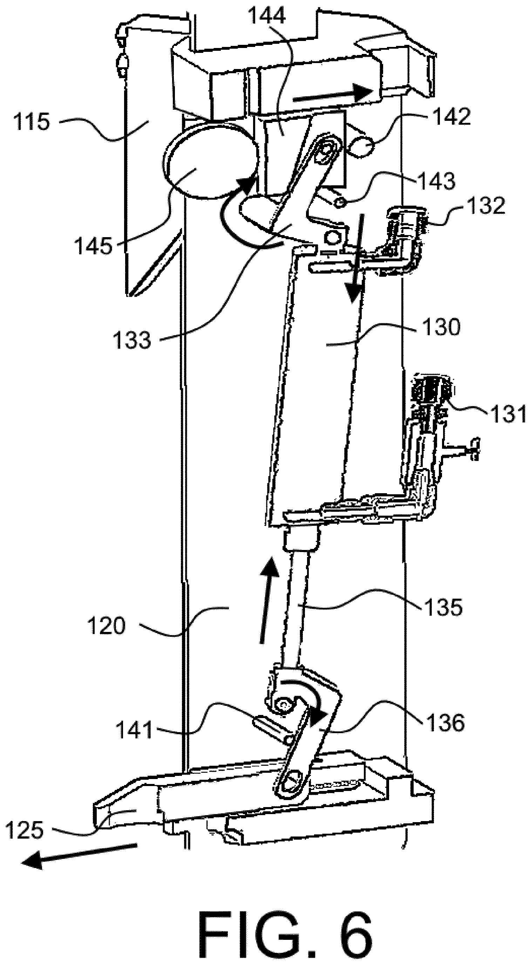

FIGS. 5 and 6 are illustrations of an example embodiment system for operating and powering grasping fork 125 or another engagement device. As shown in FIG. 5, one example of a local power source may be a pneumatic tube 130 secured within body 120. Pneumatic tube 130 may be remotely controlled, such as through wireless signals instructing a receiver and transducers to actuate tube 130, or through pneumatic lines 131 and 132 running up to operators working above on a bridge or crane. For example, one pneumatic line 131 may be an actuation line, and another pneumatic line 132 may be a relief line. As controls or pressurized fluid is selectively directed to/from lines 132 and 131 from the operator, pneumatic tube 130 may actuate with appropriate force, such as by expanding or contracting expansion rod 135.

In the example embodiment system, pneumatic tube 130 is connected at opposite ends to two actuation arms. At top, a roller actuation arm 133 is rotatably coupled with pneumatic tube 130. Roller actuation arm 133 is further coupled with a slide block 144 and biased roller 145 or other blocking structure. Roller actuation arm 133 may slidably engage with block 144 that is on a track or guide so as to move in a transverse direction as roller actuation arm 133 rotates. Biased roller 145 may be rigidly secured to slide block 144 and/or biased against slide block 144 with a spring or other fastener so that roller 145 moves transversely with slide block 144. Biased roller 145 may be secured to block 144 with a degree of freedom that permits rotation of roller 145, such as through an axel. Forward stop 143 and backward stop 142 may keep slide block 144 and roller actuation arm 133 within desired transverse positions or from under- or over-extending.

Biased roller 145 may be positioned vertically below a top of wing 115 while extending transversely outward with wing 115. In this way, the roller 145 may rest on a top of top guide 50 (FIG. 3) and block further vertical movement of an example embodiment tool when extended. For example, biased roller 145 may be positioned below a top of wing 115 a distance equal to a distance of depression required to remove a dry tube from the top guide, such as a distance equal to a length of knob 11 (FIG. 1) that must be traversed in order to remove the same from top guide 50. Biased roller 145 may support an example embodiment tool on a top guide, while an engagement structure, such as grasping fork 125, may be positioned at a level of boss 13 of tube 10. (FIGS. 1-2). In this way, grasping fork 125 may be initially held at a vertical position to mate with boss 13 by virtue of the positioning created by biased roller 145 seated on a top guide.

At bottom, an engagement actuation arm 136 is rotatably coupled with pneumatic tube 130, such as through an expansion rod 135. Actuation arm 136 may oppositely couple with retention fork 125, which, much like block 144, can be driven transversely upon rotation of engagement actuation arm 136. A stop 141 may prevent over-rotation of engagement arm 136, allowing fork 125 to extend only a desired distance, such as the distance to a dry tube to which fork 125 mates.

When pneumatic cylinder 130 is driven to expand, such as through appropriate actuation of lines 132 and/or 131, as shown in FIG. 5, biased roller 145 may be in an extended transverse position, while grasping fork 125 is withdrawn. When pneumatic cylinder 130 is driven to contract, biased roller 145 may roll back as shown in FIG. 6 because roller actuation arm 133 is rotated clockwise by contraction of cylinder 130. Similarly, grasping fork 125 may be driven outward as shown in FIG. 6 because engagement actuation arm 136 is also driven clockwise, such as through contraction of expansion rod 135 into cylinder 130.

In this way, as grasping fork 125 moves outward to engage a dry tube, fork 125 and all of example embodiment tool 100 may vertically lower through biased roller 145 withdrawing off of a top guide. Thus, grasping fork 125 may engage with a dry tube transversely and then depress the dry tube vertically through movement of an example embodiment system for operating and powering grasping fork 125. Similarly, repeating or reversing the expansion of cylinder 130 may permit transverse withdrawal and/or installation of a dry tube engaged with retaining fork 125.

Example embodiment dry tube removal tool 100 may be fabricated of resilient materials that are compatible with a nuclear reactor environment without substantially changing in physical properties, such as becoming substantially radioactive, melting, brittling, or retaining/adsorbing radioactive particulates. For example, several known structural materials, including austenitic stainless steels 304 or 316, XM-19, zirconium alloys, nickel alloys, Alloy 600, etc. may be chosen for any element of components of example embodiment tool 100. Joining structures and directly-touching elements may be chosen of different and compatible materials to prevent fouling.

Example methods may use example embodiment tools to manipulate dry tubes in nuclear reactors without needing to remove all fuel assemblies adjacent to any dry tube. For example, an example embodiment tool 100, shown in FIGS. 3 and 4, may be lowered from an operating bridge via a cable, handling pole, or crane into a flooded reactor, such that the tool is completely submerged and descends to an open position in the top guide. While some fuel may have been removed prior to introduction of the tool, the dry tube of interest need not be completely surrounded by open space. For example, an assembly diagonal and directly adjacent from the dry tube need not be removed. The tool may be seated through a grid in the top guide diagonal from the remaining fuel assembly, such as via wings seating on the sides of the top guide. Once secured, the moveable retainer may extend from the tool to engage the dry tube in example methods. If the dry tube is like dry tube 10 in FIGS. 1 & 2, the retainer may depress a plunger or other release to remove the dry tube from its location in the core. The tool and dry tube secured to the tool by the retainer may be moved in and/or removed from the reactor for desired placement or disposal.

Similarly, for dry tube installation, example methods may be reversed and a new dry tube or replacement dry tube may be attached to example embodiment tools and submerged to their core position without removing all adjacent fuel. By lowering the dry tube into its holder, depressing any plunger, and transversely inserting the tube into its top guide position, the tube may be installed with example embodiments. Of course, an example embodiment system for operating and powering the tool with a pneumatic cylinder can be used for combined transverse and vertical movement to achieve desired depression and positioning for installation and removal.

Example embodiments and methods thus being described, it will be appreciated by one skilled in the art that example embodiments may be varied and substituted through routine experimentation while still falling within the scope of the following claims. For example, a variety of different reactor structures that join together to direct flow configurations are compatible with example embodiment systems and seals simply through proper dimensioning of example embodiments - and fall within the scope of the claims. Such variations are not to be regarded as departure from the scope of these claims.

## Claims

1. A tool system (100) for handling a dry tube (10) in a nuclear reactor including a plurality of fuel assemblies arranged under a top guide (50) having a grid shape inside the nuclear reactor, the system comprising:
a body (120); and
a moveable retainer (125) shaped to selectively secure to the dry tube (10) from the single opening so as to move the dry tube (10) without intersecting one of the fuel assemblies in other openings directly adjacent to the dry tube (10); wherein the body (120) comprises:
a transverse cross-section shaped to the top guide (50) such that the body fits in a single quadrant of an opening in the top guide (50); and
a plurality of wings (115) attached to the body (120);
**characterized in that**
the plurality of wings (115) are shaped to fit around two separate sides of the grid at a top end of the top guide (50).

2. The tool system (100) of claim 1, being arranged such that the wings (115) are the only elements of the tool system (100) which extend within any opening of the top guide (50), other than the one occupied by the body (120), such that the removal of fuel assemblies in all openings adjacent to the dry tube, other than the one occupied by the body (120) is avoided.

3. The tool system (100) of either one of claims 1 and 2, wherein each of the wings (115) extend at a 90-degree angle from each other

4. The tool system (100) of any preceding claim, wherein the movable retainer (125) is a grasping fork which is configured to move transversely outward from the body (120) and vertically downward so as to unseat the dry tube (10) from the top guide (50).

5. The tool system (100) of any preceding claim, wherein the moveable retainer (125) is remotely powered.

6. The tool system (100) of any preceding claim, further comprising:
a connection post (110) configured to connect the tool system (100) to an operator above the reactor, wherein the tool system (100) is configured to be completely submerged in reactor coolant.

7. The tool system (100) of any preceding claim, further comprising:
a drive (130) configured to extend and retract the moveable retainer (125); and a moveable block (145) positioned to stop the tool (100) on the top guide (50), wherein the moveable block (145) is driven by the drive (130) simultaneously with the moveable retainer (125).

8. The tool system (100) of claim 7, wherein the wings are positioned to stop the tool system (100) at a lower vertical position than the moveable block (145), and wherein the drive includes a pneumatic tube (130).

9. A method of manipulating a dry tube (10) in a nuclear reactor, the method comprising:
removing fuel assemblies directly adjacent to the dry tube (10) such that at least one fuel assembly remains directly adjacent to the dry tube (10);
inserting a dry tube manipulation tool (100) adjacent to the dry tube (10) through a single opening of a grid of a top guide (50) in the reactor in which the fuel assembly has been removed, and opposite of the at least one remaining fuel assembly;
attaching a retainer (125) of the tool to the dry tube (10); and
removing the tool (100) and the attached dry tube (10) from a position adjacent to the at least one remaining fuel assembly;
**characterized in that**;
the tool (100) includes a body (120) comprising a transverse cross-section shaped to the top guide (50) such that the body fits in a single quadrant of an opening in the top guide (50); and
a plurality of wings (115) attached to the body (120) and shaped to fit around two separate sides of the grid at a top end of the top guide (50).

10. The method of claim 9, wherein the inserting step includes lowering the tool (100) from above the nuclear reactor such that the tool is completely submerged in coolant in the nuclear reactor.

11. The method of either of claim 9 or 10, wherein the removing step includes vertically depressing a plunger (17) on the dry tube (10) to nondestructively disconnect the drytube (10) from a top guide (50) in the nuclear reactor, wherein the vertically depressing step includes vertically moving the retainer (125) downward with respect to a body (120) of the tool (100).

12. The method of any of claims 9 to 11, wherein the inserting step includes seating the wings (115) over two separate adjacent sides of an opening in the top guide (15).

13. The method of claim 14, wherein each of the wings (115) extend at a 90-degree angle from each other.

14. The method of any of claims 9 to 13, wherein the step of attaching includes extending the retainer (125), in the form of a grasping fork, transversely to clamp around the dry tube (10).

15. The method of claim 14, wherein the step of attaching includes extending transversely the grasping fork around a depressible plunger (17) of the dry tube (10) and vertically lowering the grasping fork to depress the plunger (17), wherein the vertically lowering step includes withdrawing a block (145) of the dry tube manipulation tool (100) simultaneously with the fork being extended so the dry tube manipulation tool (100) and fork move vertically lower, wherein the step of withdrawing the block (145) and extending transversely the grasping fork are both executed with a pneumatic cylinder (130) moving the block and the grasping fork.

## Patentansprüche

1. Werkzeugsystem (100) für die Handhabung eines trockenen Rohrs (10) in einem Nuklearreaktor, umfassend eine Mehrzahl von Treibstoffanordnungen, angeordnet unter einer oberen Führung (50), die eine Gitterform hat, im Inneren des Nuklearreaktors, wobei das System umfasst,
einen Körper (120) und eine bewegliche Aufnahme (125), geformt, um selektiv an dem trockenen Rohr (10) befestigt zu werden von der einzigen Öffnung, so dass das trockene Rohr (10) bewegt wird, ohne eine der Treibstoffanordnungen in anderen Öffnungen, direkt benachbart zu dem trockenen Rohr (10), zu kreuzen, wobei der Körper (120) umfasst:
einen transversalen Querschnitt geformt entsprechend der oberen Führung (50), so dass der Körper in einen einzelnen Quadranten einer Öffnung der oberen Führung (50) passt und eine Mehrzahl von Flügeln (115), angebracht an dem Körper (120), **dadurch gekennzeichnet, dass** die Mehrzahl von Flügeln (115) geformt ist, um um zwei getrennte Seiten des Gitters herum, an einem oberen Ende der oberen Führung (50), zu passen.

2. Werkzeugsystem (100) nach Anspruch 1, welches so angeordnet ist, dass die Flügel (115) die einzigen Elemente des Werkzeugsystems (100) sind, welche sich in irgendeiner Öffnung der oberen Führung (50) erstrecken, außer derjenigen, welche von dem Körper (120) belegt wird, so dass das Entfernen von Treibstoffanordnungen in allen Öffnungen benachbart zu dem trockenen Rohr, außer derjenigen, die von dem Körper (120) belegt ist, vermieden wird.

3. Werkzeugsystem (100) nach einem der Ansprüche 1 oder 2, bei dem sich jeder der Flügel (115) in einem 90°-Winkel zu jedem anderen erstreckt.

4. Werkzeugsystem (100) nach einem der vorhergehenden Ansprüche, bei dem die entfernbare Aufnahme (125) eine Greifgabel ist, welche ausgebildet ist, um sich transversal nach außerhalb von dem Körper zu bewegen, sowie vertikal abwärts, so dass das trockene Rohr (10) von der oberen Führung (50) abhebt.

5. Werkzeugsystem (100) nach einem der vorhergehenden Ansprüche, bei dem die bewegliche Aufnahme (125) ferngesteuert angetrieben ist.

6. Werkzeugsystem (100) nach einem der vorhergehenden Ansprüche, weiterhin umfassend:
eine Verbindungsstange (110), die ausgebildet ist, das Werkzeugsystem (100) mit einem Operator oberhalb des Reaktors zu verbinden, wobei das Werkzeugsystem (100) ausgebildet ist, um vollständig in Reaktorkühlmittel eingetaucht zu werden.

7. Werkzeugsystem (100) nach einem der vorhergehenden Ansprüche, weiterhin umfassend:
einen Antrieb (130), ausgebildet, die bewegliche Aufnahme (125) auszufahren und zurückzuziehen und einen beweglichen Block (145), der positioniert ist, um das Werkzeug (100) an der oberen Führung (50) anzuhalten, wobei der bewegliche Block (145) von dem Antrieb (130) simultan mit der beweglichen Aufnahme (125) angetrieben wird.

8. Werkzeugsystem (100) nach Anspruch 7, bei dem die Flügel positioniert sind, das Werkzeugsystem (100) in einer vertikalen Position weiter unten als der bewegliche Block (145) anzuhalten und bei dem der Antrieb ein pneumatisches Rohr (130) umfasst.

9. Verfahren zur Handhabung eines trockenen Rohrs (10) in einem Nuklearreaktor, wobei das Verfahren umfasst: das Entfernen von Treibstoffanordnungen direkt benachbart zu dem trockenen Rohr (10), so dass wenigstens eine Treibstoffanordnung direkt benachbart zu dem trockenen Rohr (10) verbleibt, das Einsetzen eines Werkzeugs (100) zur Handhabung des trockenen Rohrs, benachbart zu dem trockenen Rohr (10) durch eine einzelne Öffnung eines Gitters einer oberen Führung (50) in dem Reaktor, in dem die Treibstoffanordnung entfernt wurde, und gegenüberliegend zu der wenigstens einen verbleibenden Treibstoffanordnung, Anbringen einer Aufnahme (125) für das Werkzeug an dem trockenen Rohr (10) und Entfernen des Werkzeugs (100) und des angebrachten trockenen Rohres (10) aus einer Position benachbart zu der wenigstens einen verbleibenden Treibstoffanordnung, **dadurch gekennzeichnet, dass** das Werkzeug (100) einen Körper (120) aufweist, umfassend einen transversalen Querschnitt, geformt entsprechend der oberen Führung (50), so dass der Körper in einen einzelnen Quadranten einer Öffnung in der oberen Führung (50) passt und eine Mehrzahl von Flügeln (115), die an dem Körper (120) angebracht sind und so geformt sind, dass sie um zwei separate Seiten des Gitters herum an einem oberen Ende der oberen Führung passen.

10. Verfahren nach Anspruch 9, bei dem der Schritt des Einsetzens das Absenken des Werkzeugs (100) von oberhalb des Nuklearreaktors einschließt, so dass das Werkzeug vollständig eingetaucht ist in Kühlmittel des Nuklearreaktors.

11. Verfahren nach einem der Ansprüche 9 oder 10, bei dem der Schritt des Entfernens das vertikale herunterdrücken eines Kolbens (17) auf das trockene Rohr (10) umfasst, um das trockene Rohr nicht zerstörend von einer oberen Führung (50) in dem Nuklearreaktor zu lösen, wobei der Schritt des vertikalen Herunterdrückens ein vertikales Bewegen der Aufnahme (125) nach unten in Bezug auf einen Körper (120) des Werkzeugs (100) umfasst.

12. Verfahren nach einem der Ansprüche 9 bis 11, bei dem der Schritt des Einsetzens das Lagern der Flügel (115) über zwei separate benachbarte Seiten einer Öffnung in der oberen Führung (50) umfasst.

13. Verfahren nach Anspruch 12, bei dem jeder der Flügel (115) sich in einem 90°-Winkel zueinander erstreckt.

14. Verfahren nach einem der Ansprüche 9 bis 13, bei dem der Schritt des Anbringens das Ausfahren der Aufnahme (125), in Form einer Greifgabel, in Querrichtung umfasst, um sich um das trockene Rohr (10) herum zu klemmen.

15. Verfahren nach Anspruch 14, bei dem der Schritt des Anbringens das Ausfahren der Greifgabel in Querrichtung um einen herunterdrückbaren Kolben (17) des trockenen Rohres (10) herum umfasst und das vertikale Herabsenken der Greifgabel, um den Kolben (17) herunter zu drücken, wobei der Schritt des vertikalen Absenkens das Zurückziehen eines Blocks (145) des Werkzeugs (100) zur Handhabung des trockenen Rohres (10) umfasst, wobei gleichzeitig die Gabel ausfährt, so dass das Werkzeug (100) zur Handhabung des trockenen Rohres und die Gabel sich vertikal nach unten hin bewegen, wobei der Schritt des Zurückziehens des Blocks (145) und des Ausfahrens der Greifgabel in Querrichtung beide ausgeführt werden mit einem pneumatischen Zylinder (130), welcher den Block und die Greifgabel bewegt.

## Revendications

1. Système d'outil (100) pour manipuler un tube sec (10) dans un réacteur nucléaire comprenant une pluralité d'assemblages combustibles disposés sous un guide supérieur (50) ayant une forme de grille à l'intérieur du réacteur nucléaire, le système comprenant :
un corps (120) ; et
un élément de retenue mobile (125) conformé pour être fixé de manière sélective au tube sec (10) depuis l'unique ouverture de façon à déplacer le tube sec (10) sans croiser l'un des assemblages combustibles dans d'autres ouvertures directement adjacentes au tube sec (10) ;
le corps (120) comprenant :
une section transversale conformée au guide supérieur (50) de telle sorte que le corps s'adapte dans un unique quadrant d'une ouverture dans le guide supérieur (50) ; et
une pluralité d'ailettes (115) fixées au corps (120) ;
**caractérisé par le fait que** la pluralité d'ailettes (115) sont conformées pour s'adapter autour de deux côtés distincts de la grille à une extrémité supérieure du guide supérieur (50).

2. Système d'outil (100) selon la revendication 1, disposé de telle sorte que les ailettes (115) sont les seuls éléments du système d'outil (100) qui s'étendent à l'intérieur d'une ouverture quelconque du guide supérieur (50), autre que celle occupée par le corps (120), de telle sorte que le retrait d'assemblages combustibles dans toutes ouvertures adjacentes au tube sec, autres que celle occupée par le corps (120), est évité.

3. Système d'outil (100) selon l'une des revendications 1 et 2, dans lequel chacune des ailettes (115) s'étend à un angle de 90 degrés par rapport à l'autre.

4. Système d'outil (100) selon l'une quelconque des revendications précédentes, dans lequel l'élément de retenue mobile (125) est une fourche de préhension qui est configurée pour se déplacer transversalement vers l'extérieur depuis le corps (120) et verticalement vers le bas de façon à détacher le tube sec (10) du guide supérieur (50).

5. Système d'outil (100) selon l'une quelconque des revendications précédentes, dans lequel l'élément de retenue mobile (125) est alimenté à distance.

6. Système d'outil (100) selon l'une quelconque des revendications précédentes, comprenant en outre :
un montant de liaison (110) configuré pour relier le système d'outil (100) à un opérateur au-dessus du réacteur, le système d'outil (100) étant configuré pour être entièrement immergé dans un réfrigérant de réacteur.

7. Système d'outil (100) selon l'une quelconque des revendications précédentes, comprenant en outre :
un entraînement (130) configuré pour déployer et rétracter l'élément de retenue mobile (125) ; et un bloc mobile (145) positionné pour arrêter l'outil (100) sur le guide supérieur (50), le bloc mobile (145) étant entraîné par l'entraînement (130) simultanément avec l'élément de retenue mobile (125).

8. Système d'outil (100) selon la revendication 7, dans lequel les ailettes sont positionnées pour arrêter le système d'outil (100) dans une position verticale plus basse que le bloc mobile (145), et l'entraînement comprenant un vérin pneumatique (130).

9. Procédé de manipulation d'un tube sec (10) dans un réacteur nucléaire, le procédé comprenant :
retirer des assemblages combustibles directement adjacents au tube sec (10) de telle sorte qu'au moins un assemblage combustible reste directement adjacent au tube sec (10) ;
introduire un outil de manipulation de tube sec (100) adjacent au tube sec (10) à travers une unique ouverture d'une grille d'un guide supérieur (50) dans le réacteur dans lequel l'assemblage combustible a été retiré, et à l'opposé de l'au moins un assemblage combustible restant ;
fixer un élément de retenue (125) de l'outil au tube sec (10) ; et
retirer l'outil (100) et le tube sec fixé (10) d'une position adjacente à l'au moins un assemblage combustible restant ;
**caractérisé par le fait que** :
l'outil (100) comporte un corps (120) comprenant une section transversale conformée au guide supérieur (50) de telle sorte que le corps s'adapte dans un unique quadrant d'une ouverture dans le guide supérieur (50) ; et une pluralité d'ailettes (115) fixées au corps (120) et conformées pour s'adapter autour de deux côtés distincts de la grille à une extrémité supérieure du guide supérieur (50).

10. Procédé selon la revendication 9, dans lequel l'étape d'introduction comprend abaisser l'outil (100) depuis le dessus du réacteur nucléaire de telle sorte que l'outil est entièrement immergé dans un réfrigérant dans le réacteur nucléaire.

11. Procédé selon la revendication 9 ou 10, dans lequel l'étape de retrait comprend enfoncer verticalement un piston (17) sur le tube sec (10) pour séparer de manière non-destructive le tube sec (10) d'un guide supérieur (50) dans le réacteur nucléaire, l'étape d'enfoncement vertical comprenant déplacer verticalement l'élément de retenue (125) vers le bas par rapport à un corps (120) de l'outil (100).

12. Procédé selon l'une quelconque des revendications 9 à 11, dans lequel l'étape d'introduction comprend placer les ailettes (115) sur deux côtés adjacents distincts d'une ouverture dans le guide supérieur (15).

13. Procédé selon la revendication 14, dans lequel chacune des ailettes (115) s'étend à un angle de 90 degrés par rapport à l'autre.

14. Procédé selon l'une quelconque des revendications 9 à 13, dans lequel l'étape de fixation comprend déployer l'élément de retenue (125), sous la forme d'une fourche de préhension, transversalement pour se serrer autour du tube sec (10).

15. Procédé selon la revendication 14, dans lequel l'étape de fixation comprend déployer transversalement la fourche de préhension autour d'un piston pouvant être enfoncé (17) du tube sec (10) et abaisser verticalement la fourche de préhension pour enfoncer le piston (17), l'étape d'abaissement vertical comprenant retirer un bloc (145) de l'outil de manipulation de tube sec (100) simultanément avec le déploiement de la fourche de telle sorte que l'outil de manipulation de tube sec (100) et la fourche se déplacent verticalement vers le bas, les étapes de retrait du bloc (145) et de déploiement transversal de la fourche de préhension étant toutes les deux exécutées avec un vérin pneumatique (130) déplaçant le bloc et la fourche de préhension.
